# EUROPEAN PATENT SPECIFICATION

(11) **EP 1 152 559 B1**
(45) Date of publication and mention of the grant of the patent: **01.04.2009**
(21) Application number: 00979966.9
(22) Date of filing: 07.12.2000
(51) Int. Cl.: H04W 4/22

(54) **INFORMATION PROVIDING METHOD, MOBILE COMMUNICATION NETWORK, MOBILE COMMUNICATION TERMINAL AND INFORMATION MANAGEMENT SYSTEM**
VERFAHREN ZUR BEREITSTELLUNG VON INFORMATIONEN; MOBILES KOMMUNIKATIONSNETZWERK, MOBILES KOMMUNIKATIONSENDGERÄT UND INFORMATIONSVERWALTUNGSSYSTEM
PROCÉDÉ DE DIFFUSION D'INFORMATION, RÉSEAU DE COMMUNICATION MOBILE, TERMINAL DE COMMUNICATION MOBILE ET SYSTÈME DE GESTION D'INFORMATION

(30) Priority: 09.12.1999 JP 35040399
(43) Date of publication of application: 07.11.2001
(73) Proprietor: NTT DoCoMo, Inc., Tokyo (JP)
(72) Inventor: OGASAWARA, Koichi, Chigasaki-shi, Kanagawa 253-0025 (JP)
(74) Representative: HOFFMANN EITLE
(86) International application number: PCT/JP2000/008653
(87) International publication number: WO 2001/043323

(56) References cited:
- EP-A- 0 853 287
- EP-A- 0 964 541
- EP-A2- 0 944 275
- WO-A-98/19479
- WO-A-99/26428
- JP-A- 10 200 493
- JP-A- 11 112 664
- JP-A- 11 282 863
- US-A- 5 579 535
- US-A- 5 727 057

## Description

### TECHNICAL FIELD

This invention relates to an information providing method for providing information to mobile communication terminal users via a mobile communication network; a mobile communication network and a mobile communication terminal used for the method.

### BACKGROUND ART

In recent years, a cellular-type mobile communication network that serves mobile communication terminals such as mobile phones has widely spread. In such a mobile communication network, it is necessary for the network to grasp the present location of a mobile communication terminal in order to call up the mobile communication terminal when receiving a call. The location search of the mobile communication terminal is performed for this purpose.

This location search is performed in units of area which is formed by collecting a number of cells, the cells being formed by base stations in the mobile communication network and ranging from hundreds of meters to several kilometers in radius. Each base station transmits area identification information, and mobile communication terminal detects that it has transferred to a different area according to changes in the area identification information. The mobile communication terminal then sends location registration request signals to the network, and identification information of the mobile communication terminal and the area identification information of a new location are stored in the location database in the network. The network, thus, is able to grasp the present location of a mobile communication terminal at all times, and this information is utilized for calling up mobile communication terminal in receiving a call.

Recently, a variety of a non-voice use of the mobile communication network has been prevailing, and a data communication service has been suggested to provide value-added information regarding local area where mobile communication terminals are located by utilizing the registered location related information as exemplified above.

An area in which the conventional location search is performed, however, covers a wide range of greater than 10 kilometers in radius because each area is the collection of many wireless cells; a problem lies here in that it is impossible to provide detailed location related information regarding a limited area around a particular station where a mobile communication terminal is located, given that location related information provision services are provided based on the conventional location related information.

The post-published document EP 0 964 541 A2 describes a digital data transmitting/receiving method, a base station unit, and a mobile object terminal unit, which enables to collect information desired by the mobile object terminal among service information distributed in the base station by using a broadcasting channel. A data base holds various kinds of service information and a data generating means extracts the service information having contents to the broadcast from the service information.

US 5,579,535 describes a personal communication system providing a supplemental information mode. The personal communication system comprises a transceiver station providing communication capabilities between one or more portable radio telephones and a telephone network. The personal communication system provides means for transmitting positional information and means for collecting localized information pertaining to landmarks located within the vicinity of one or more telepoint base stations. Positional information and localized information are preferably stored as a system information data base by the network control center for transmission to the telepoint base stations. The entry of information included in the system information database can be provided by conventional telephone handsets, or through the use of computers or video display terminals.

### DISCLOSURE OF INVENTION

This invention is made under the above-mentioned situation, and has an object to provide an information providing method, a mobile communication network, and a mobile communication terminal that can provide detailed location related information to users of mobile communication terminals.

This is achieved by the features of the independent claims. Advantageous embodiments are described in the dependent claims.

This invention, in order to solve the above-mentioned problem, provides an information providing method for providing information to mobile communication terminals by dispatching information signals from base stations of the mobile communication network that serves a plurality of mobile communication terminals. The information providing method comprises a step of accumulating, within the network, location related information related to wireless cells covered by a given base station, a step of broadcasting said location related information as information signals from said base station, and a step of a mobile communication terminal located within the range of wireless cells covered by said base station receiving said information signals; and a mobile communication network and mobile communication terminals for carrying out the method. This invention, thus, allows to provide the detailed location related information to mobile communication terminals users.

### BRIEF DESCRIPTION OF THE DRAWINGS

Fig.1 is a block diagram showing an overall configuration of a mobile communication system according to an embodiment of the present invention.
Fig.2 is a block diagram showing a hardware configuration of a mobile station 10 in the embodiment.
Fig.3 is a block diagram showing a functional configuration of a gateway server 25 in the embodiment.
Fig.4A and Fig.4B are data format diagrams of an information storage 254 provided in the gateway server 25 in the embodiment.
Fig.5 is a block diagram showing a configuration of a base station control unit 22A in the embodiment.
Fig.6A and Fig.6B are data format diagrams of a memory 223A provided in the base station control unit 22A in the embodiment.
Fig.7 is a flow diagram showing an operation of information transmission of the mobile communication system in the embodiment.
Fig.8A to Fig.8C are diagrams showing examples of display images shown on the liquid crystal display of the mobile station 10 in the embodiment.
Fig.9 is a flow diagram showing an operation in updating location related information of the mobile communication system in the embodiment.
Fig.10 is a flow diagram showing an operation of updating menu information of the mobile communication system in the embodiment.

### BEST MODE FOR CARRYING OUT THE INVENTION

### 1: Configuration

### 1-1: Overall Configuration of Mobile Communication System

First of all, a configuration of a whole mobile communication system will be discussed below according to an embodiment of the present invention.

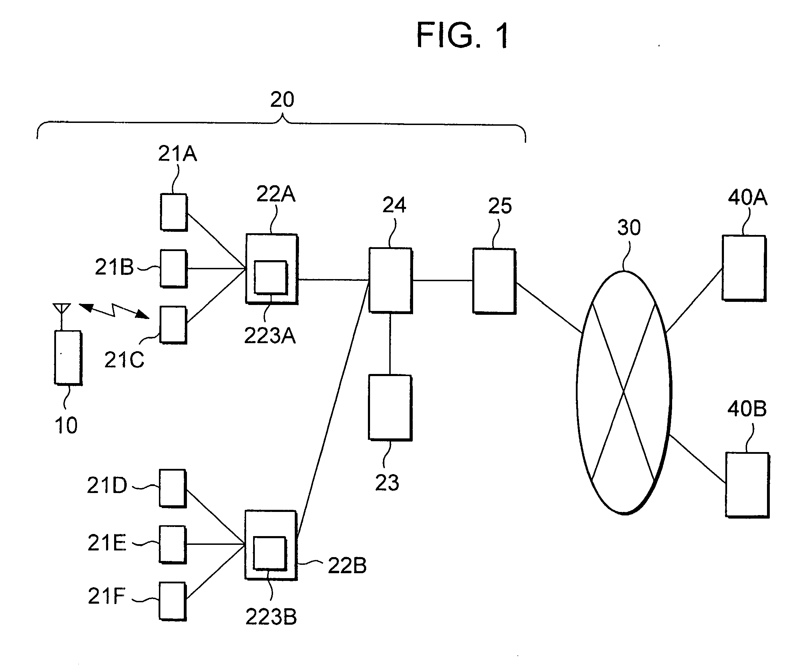

Fig.1 is a block diagram showing the configuration of the whole mobile communication system. As shown in the figure, this mobile communication system has a mobile station 10 as a mobile communication terminal, a mobile packet communication network 20, Internet 30 as a network, and IP servers 40A and 40B as server devices.

The mobile station 10, for example, is served by the mobile packet communication network 20 and is a mobile phone capable of performing data transmission. Using this mobile station 10 enables its user to refer to various information provided from the mobile packet communication network 20. The mobile packet communication network 20 is a communication network for providing a packet communication service to a mobile station 10. This network has base stations 21A to 21F for transmitting location related information as information signals, base station control units 22A and 22B, a home memory 23, and a packet subscriber processing unit 24, a gateway server 25, and a communication cable connecting these components to one another.

The base stations 21A to 21F are spaced out at a certain distance within a mobile communication service area and perform a wireless communication with the mobile station 10 located within a wireless cell zone covered by each base station.

Each of the base station control units 22A and 22B is connected to a plurality of the base stations 21A to 21C, or 21D to 21F, and controls a communication processed by the base stations 21A to 21C, or 21D to 21F.

In addition, this base station control unit 22A, or 22B, is equipped with a memory 223A, or 223B, that stores location related information to be delivered to each of its subordinate base stations 21A to 21C, or 21D to 21F, these information being stored corresponding to each of the base stations 21A to 21C, or 21D to 21F.

The base stations 21A to 21F generate information signals indicating various information delivered from the base stations control units 22A and 22B, and transmits the generated information signals to wireless cells covered by each station. The information delivered from the base station control unit 22A, or 22B, to the base stations 21A to 21C, or 21D to 21F, are information related with a local area where each of the base stations 21A to 21C, or 21D to 21F, is located, the information being hereinafter referred to as location related information. A service for providing those location related information to a user of the mobile station 10 via the base stations 21A to 21F will be referred to as location related information providing service hereinafter.

The home memory 23 stores various information such as subscriber information, registered location information, accounting information, and authentication information registered as a database. These information are read out by a remote access from the base station control units 22A and 22B and the packet subscriber processing unit 24, and utilized for various types of control processings in the network.

The packet subscriber processing unit 24 receives a packet switching request from the mobile station 10, and handles the processing of relaying the above packet switching, given that the packet switching request is justified after confirming the validity of the packet with reference to the home memory 23.

The gateway server 25 is a computer system established at a mobile packet gateway relaying/switching center for interconnecting the mobile packet communication network 20 and other networks such as the Internet 30.

This gateway server 25, in addition to performing the conversion of communication protocols between the mobile packet communication network 20 and the Internet 30, performs a relaying operation of various data exchanged among mobile stations 10, or between a mobile station 10 and the IP server 40A or 40B (hereinafter referred to as among/between nodes). The IP servers 40A and 40B each is a server system operated by an Information Provider (IP). This system accumulates location related information as data written in the Hyper Text Markup Language (HTML), and provides the accumulated location related information to the gateway server 25.

When contents of the accumulated location related information are updated, this IP server 40A or 40B transmits the fact that the information have been updated and contents of the updated information as updated information to the gateway server 25.

### 1-2:Configuration of Mobile Station 10

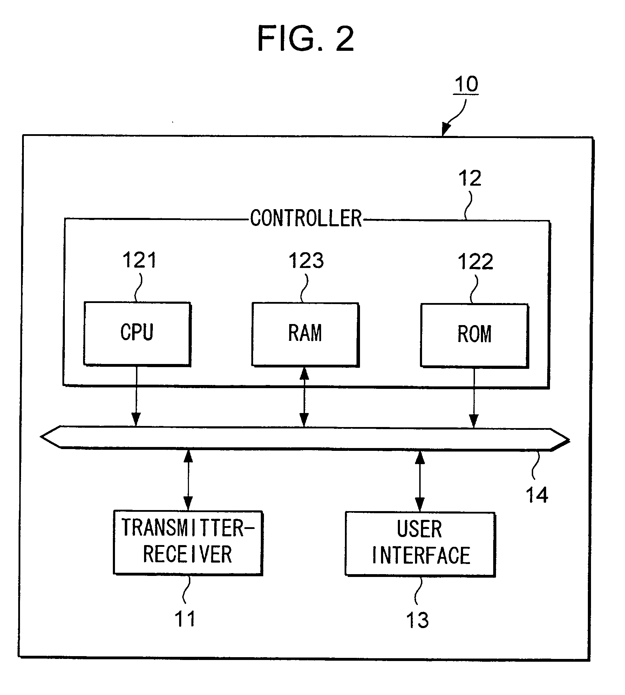

Fig.2 is a block diagram showing the configuration of the mobile station 10. The mobile station 10 has a transmitter-receiver 11 that receives information signals transmitted as location related information and transmits request signals requesting location related information; a controller 12 that validates the reception of information signals received at said transmitter-receiver and has a memory to store control information necessary for the validation; and a user interface unit 13, and a bus 14 that interconnects the above components.

The transmitter-receiver 11 conducts wireless communications with the base stations 21A to 21F of the mobile packet communication network, or the mobile communication network 20.

The user interface unit 13 is equipped with a liquid crystal display that displays various information, a keypad by which users perform various inputting operations, and a microphone and a speaker for users' calling operations.

The controller 12 controls each of the components of the mobile station 10, and has a CPU 121, a ROM 122, and a RAM 123.

The ROM 122 stores various control programs; the CPU 121 reads out these control programs and carries out various types of control processings. The RAM 123 is used as a work area at this time.

The control programs within the ROM 122 include a document data viewing software, known as a browser, in addition to programs regarding calling functions of the mobile station 10.

When the transmitter-receiver 11 receives data in a form of HTML transmitted from the base stations 21A to 21F, the CPU 121 reads out the mentioned browser from ROM 122 and carries it out so that the received data can be displayed on the liquid crystal display.

In order to receive this location related information providing service, a user of the mobile station 10 needs to contract in advance with a common carrier for subscribing this service. The mobile station 10 owned by a user who has made this contract stores control information for validating the reception of information signals sent from the base stations 21A to 21F.

These control information are such information as identification code information for distinguishing a mobile station 10 allowed to receive the location related information service (a mobile station 10 owned by a user who has made the service subscription contract) from a mobile station 10 not allowed to receive the service (a mobile station 10 owned by a user without the service subscription contract); or key information for interpreting information signals received by the mobile station 10. These control information are stored in the mobile station 10 by inputting the information into the mobile station 10 at the store of a communication carrier, alternatively by transmitting to the mobile station 10 from the mobile packet communication network by a wireless communication.

### 1-3: Configuration of the Gateway Server 25

A configuration of the gateway server 25 will be discussed below.

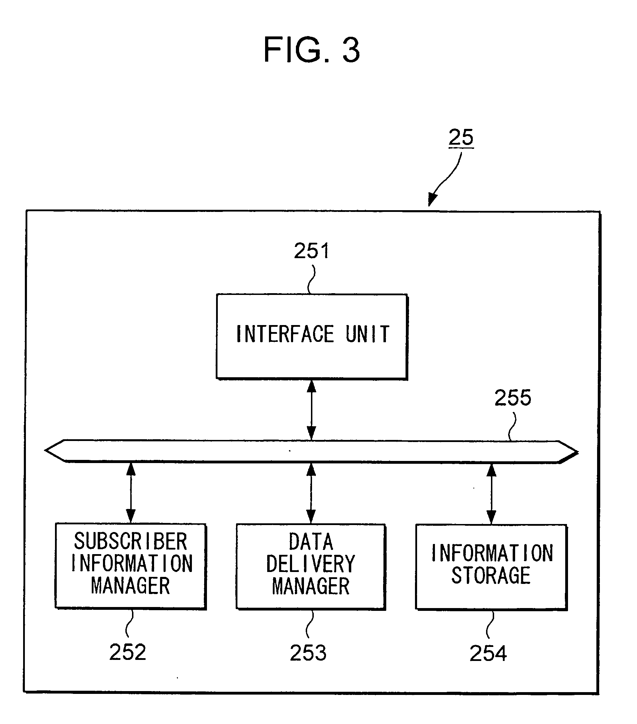

Fig.3 is a block diagram showing a functional configuration of the gateway server 25. As shown in the figure, the gateway server 25 has an interface unit 251, a subscriber information manager 252, an information storage or a memory 254, and a bus 255 interconnecting these components.

The interface unit 251 functions as an interface among networks, such as performing protocol conversions between the mobile packet communication network 20 and the Internet 30. To illustrate, the interface unit 251 performs an inter-conversion of protocols between a given transmission protocol used in the mobile packet communication network 20 and a TCP/IP (Transmission Control Protocol / Internet Protocol), which is a transmission protocol of the Internet 30.

The subscriber information manager 252 stores and manages subscriber information acquired by referring to the home memory 23 mentioned above.

The data delivery manager 253 performs a relaying operation and a delivering operation of data exchanged among nodes. For example, the data delivery manager 253 receives location related information and/or updated information sent from the IP server 40A or 40B, and delivers the location related information acquired from the information storage 254 described below, to the base station control units 22A and 22B.

The information storage 254 has two data files: a menu information file and a location related information file.

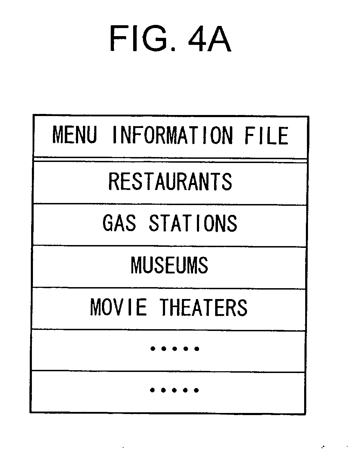

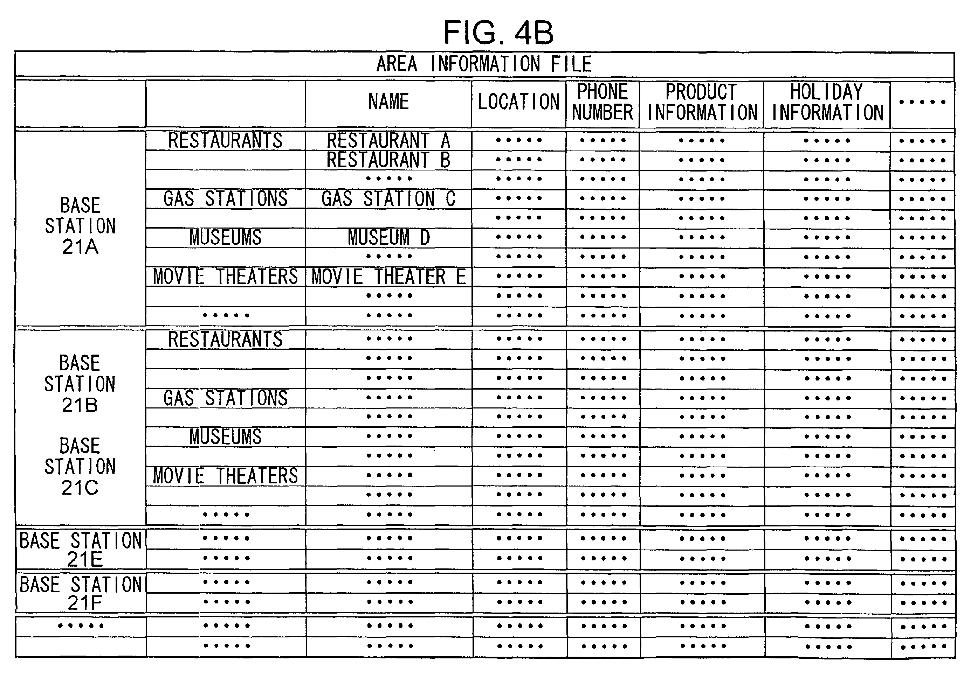

Fig.4A and Fig.4B show data formats for the menu information file and the location related information file provided in the data storage 254.

Menu information stored in the menu information file are information indicating menu items of location related information. For example, those information include such information as restaurants, gas stations, museums, and movie theaters, as shown in the figures.

Common carriers update, as required, the menu information by adding new menu items, modifying or deleting the existing menu items in the menu information file.

On the other hand, location related information stored in the location related information file are information subordinated to the above-mentioned menu information. Those information include such information as names of restaurants, their location, phone number, products, and holidays, as shown in the figures.

These location related information are stored corresponding to the base stations 21A to 21F located in each area. For example, the figures show that the restaurants A and B are located in an area where the base station A is located.

There is also a case, as shown in the figures, that each set of location related information is stored corresponding to a group of base stations consisting of a plurality of the base stations 21, the base station 21B and 21C, instead of each set of location related information being stored corresponding to a single base station 21.

Further, location related information do not necessarily correspond to all the base stations 21A to 21F as no location related information are shown for the base station D in the figures.

These location related information are information provided from the IP server 40A or 40B and updated based on the updated information from the IP server 40A or 40B, as described before.

When the menu information or location related information in the information storage 254 are updated, the data delivery manager 253 is to transmit a notification message that includes the fact that menu information or location related information have been updated and the updated information to the base stations control units 22A and/or 22B that store the updated information. The base stations control units 22A and/or 22B, upon receiving this notification message, is to update information within memories 223A and/or 223B based on the contents of the message.

### 1-4: Configuration of the base station control units 22A and 22B

A configuration of the base station control units 22A and 22B will be discussed below.

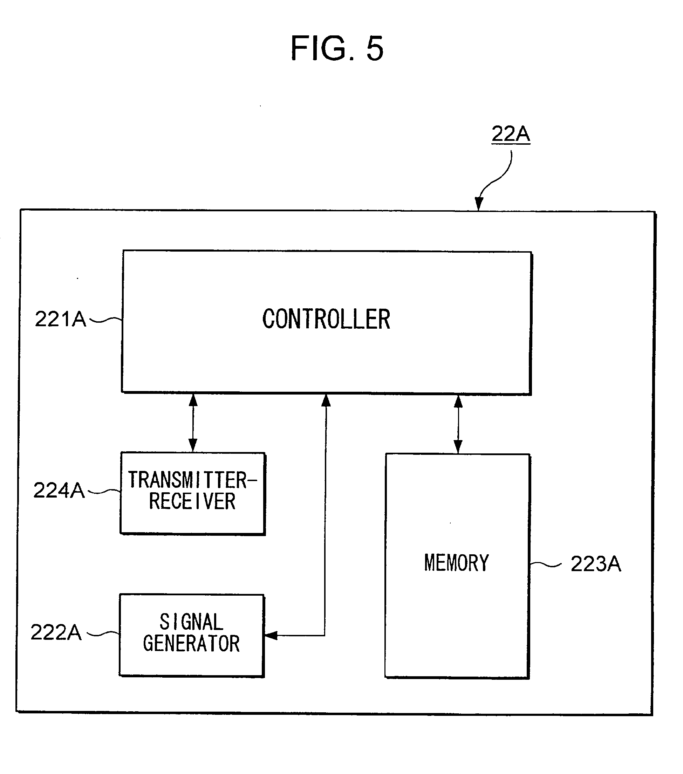

Fig.5 is a block diagram showing a configuration of the base station control unit 22A. As shown in the figure, this base station control unit 22A comprises a controller 221A, a signal generator 222A, a memory 223A, and a transmitter-receiver 224A.

The controller 221A controls throughout this base station control unit.

The signal generator 222A generates the information stored in the memory 223A into the signal receivable by the mobile station 10.

The transmitter-receiver 224A transmits and receives information exchanged with the base stations 21A to 21C controlled by the base station control unit 22A and information exchanged with the gateway server 25 via the packet subscriber processing unit 24.

Also, the transmitter-receiver 224A distributes the above information signals generated by the signal generator 222A to its subordinate base stations 21A to 21C.

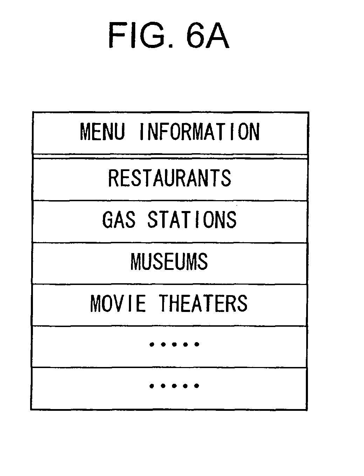

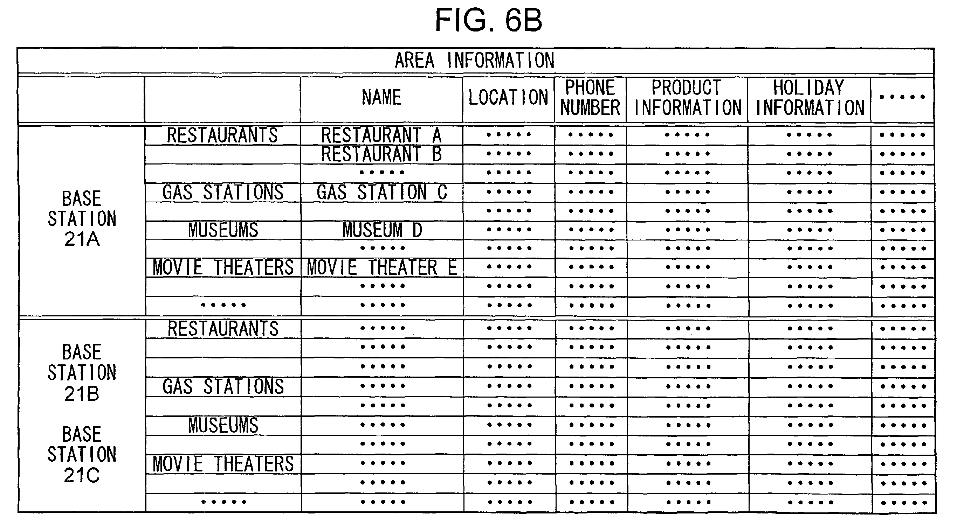

Next, the memory 223A will be discussed. Fig.6A and Fig. 6B show a memory configuration of the memory 223A. As shown in the figures, the memory 223A stores menu information, and location related information corresponding to the base stations 21A to 21C controlled by the base station control unit 22A.

The menu information stored in this memory 223A are identical information to the menu information stored in the gateway server 25 mentioned above. Location related information stored in this memory 223A are the location related information corresponding merely to the base stations 21A to 21C among the above-mentioned location related information stored in the gateway server 25.

The menu information and location related information in this memory 223 are updated according to the update notification from the gateway server 25 as mentioned before.

The base station control unit 22B has the same configuration as that of the base station control unit 22A explained above, and the location related information stored in the memory 223B include location related information corresponding only to the base stations 21D to 21F.

### 2: Operation

The operation of the present embodiment having the above configuration will be discussed below in the following two cases: one case where information are sent to the mobile station 10 from the base stations 21A to 21F; and the other case where contents of the information stored in the memory 223A, or 223B, of the base station control unit 22A, or 22B are updated.

### 2-1: Operation for Information Transmission

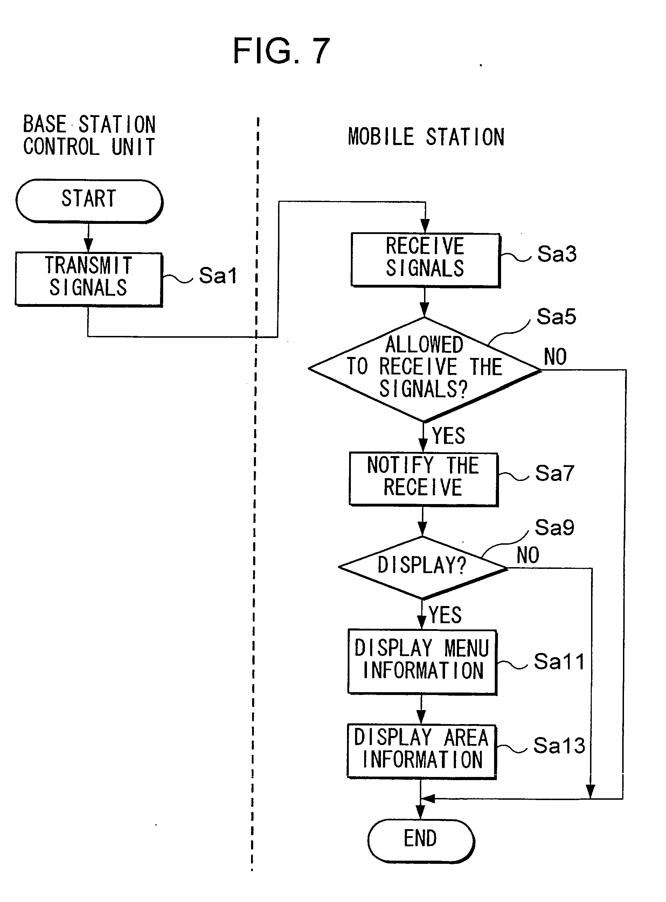

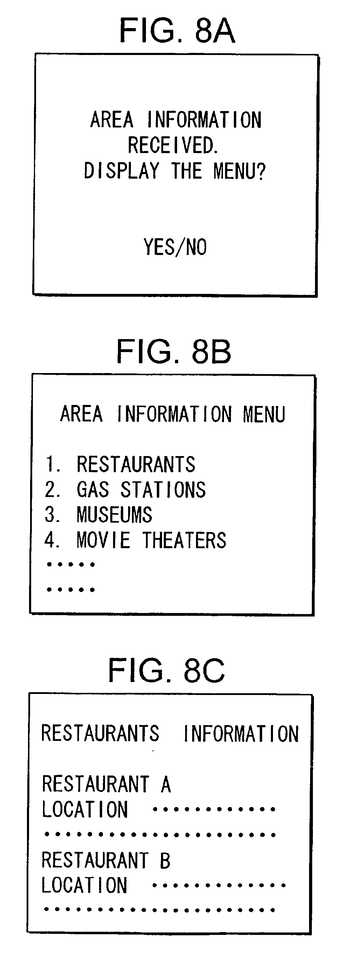

First of all, an operation in transmitting various information from any one of the base stations 21A to 21F to a mobile station 10 will be discussed, with reference to Fig.7 and Fig. 8A to Fig. 8C.

Fig.7 is a flow diagram showing operations of the base station 21A and the mobile station 10 in transmitting information; the Fig.8A to 8C are screen images shown on the liquid crystal display of the mobile station 10 during the information transmission.

The base station control unit 22A broadcasts information signals indicating menu information and location related information at all times without specifying the destination (step Sa1).

The mobile station 10 located in a wireless cell zone of the base station 21A receives information signals transmitted from the base station 21A (step Sa3).

The mobile station 10, upon receiving the signals from the base station 21A, determines as to whether it is possible to receive the location related information indicated in the received information signals (step Sa5). The determination depends on whether the control information for validating receptions of information signals are stored in advance within the mobile station. If the control information is stored, it is determined that the reception of the signals is allowed; if not stored, it is determined that the reception is not allowed.

If the result of the determination at this step Sa5 is negative (in other words, if it is not allowed to receive the location related information), the mobile station 10 abandons the received location related information and the process in the figure ends.

On the other hand, if the result of the determination at this step Sa5 is positive (in other words, if it is allowed to receive the location related information), the mobile station 10 outputs ringing melodies from its speaker indicating that the location related information have been received, shows a message asking its user whether to display the received location related information, and awaits its user for inputting the response to the message (step Sa7).

The display image shown on the liquid crystal display of the mobile station 10 at this step is indicated in Fig.8A.

Following the input from the user, the mobile station 10 determines whether to display the received location related information based on the input contents(step Sa9).

If the result of the determination at step Sa9.is negative, in other words, if the location related information should not be displayed, the process in the figure ends.

On the other hand, if the result of the step Sa9 turns out positive, in other words, if the location related information should be displayed, the mobile station 10 first interprets the received information signals and displays menu information, and awaits until the user makes a menu selection (Sa11).

A screen image shown at this stage on the liquid crystal display of the mobile station 10 is shown in the Fig.8B.

Following the input of the selected menu by the user, the mobile station 10 displays the location related information corresponding to the input contents(step Sa13), and the processing ends.

A screen image shown on the crystal liquid display of the mobile station 10 in the case of restaurants information being selected by the user at this stage, for example, is shown in the Fig.8C.

### 2-2: Operation for Information Update

Next, an operation in updating information will be described in one case of updating location related information and in the other case of updating menu information.

### 2-2-1: Operation in Updating Location Related Information

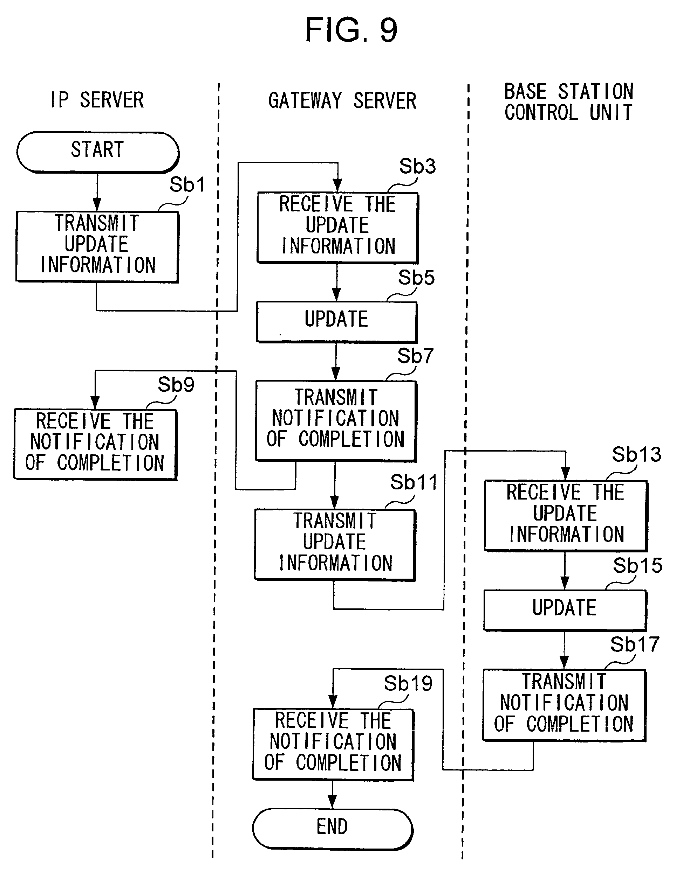

The operation in updating location related information stored in the memory 223A/223B of the base stations control unit 22A/22B will be discussed. Fig.9 is a flow diagram showing the operation in updating location related information in the memory 223A of the base station control unit 22A.

First of all, either IP server 40A or 40B updates the location related information stored in itself. It is supposed here that the IP server 40A performs this operation.

The IP server 40A, which has updated the location related information, transmits data including the fact of location related information being updated and data of updated location related information to the gateway server 25 (step Sb1). This data of updated information includes only the parts different from the unupdated data for the sake of reducing the traffic. Hereinafter, the term "the data of updated location related information" indicates the data similar to the data explained above. Likewise, the same term in the menu information in Fig. 9, which will mentioned later indicates such data.

The gateway server 25 receives the updated information from the IP server 40A (step Sb3). The gateway server 25 then interprets the received updated information and updates the location related information stored in the information storage 254 (step Sb5).

When the updating processing is completed, the gateway server 25 transmits a notification of the update completion to the IP server 40A, from which the update information is transmitted (step Sb7).

The IP server 40A receives the notification of the update completion and confirms that the updating of location related information has been processed (step Sb9).

Next, the gateway server 25 transmits the fact that the location related information have been updated and the updated location related information as an update notification to the base station control unit 22A corresponding to the updated location related information (step Sb11).

The base station control unit 22A receives the update notification from the gateway server 25 (step Sb13) and subsequently updates the location related information stored in the memory 223A according to the update notification (step Sb15).

The base station control unit 22A that has updated the location related information transmits the notification of the update completion to the gateway server 25 (step Sb17).

The gateway server 25 then receives the notification of the update completion from the base station control unit 22A (step Sb19) and confirms the completion of the update; thus, the process shown in the figure ends.

### 2-2-2: Operation in Updating Menu Information

Next, an operation in updating menu information stored in the memory 223A/223B of the base station control unit 22A/22B will be described below.

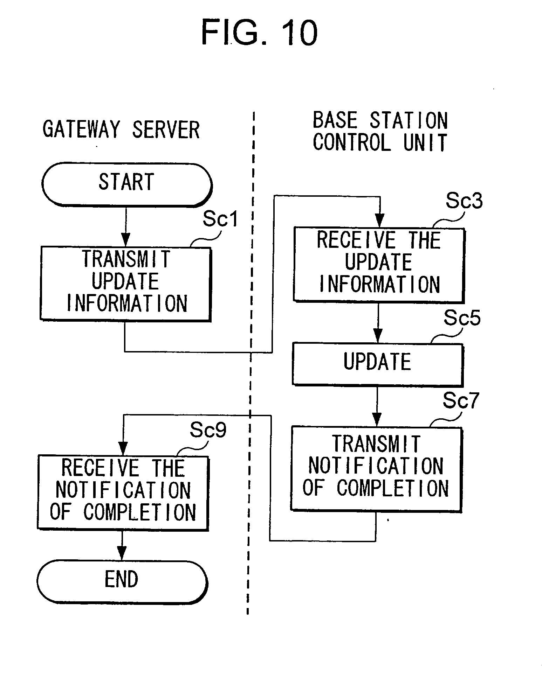

Fig. 10 is a flow diagram showing the operation in updating the menu information stored in the memory 223A.

In the operation shown in the figure, the common carrier first updates menu information stored in the gateway server 25.

The gateway server 25 transmits the fact of menu information being updated and the updated menu information as an update notification to the base station control unit 22A or 22B (step Sc1).

The base station control unit 22A or 22B receives the update notification (step Sc3) and updates the menu information stored in each memory 223A or 223B according to the update notification (step Sc5).

The base station control unit 22A or 22B transmits the notification of the update completion to the gateway server 25 (step Sc7).

The gateway server 25 then receives the notification of the update completion (step Sc9), and confirms that the updating of the menu information is completed; thus, the processing shown in the figure ends.

According to the embodiment described so far, each base station 21A to 21F transmits the information signals corresponding to its location, and a mobile station 10 located in a wireless cell zone of the base stations 21A to 21F can acquire information corresponding to its own location because using the above-mentioned control information allows the mobile station 10 to receive the information signals.

### 3: Modifications

### 3-1: Embodiment of the Mobile Station 10

### 3-1-1: Operation in Validating the Information Signals in the Mobile Station 10

In the embodiment mentioned above, the mobile station 10 stores the control information used to validate the reception of the information signals; it is possible further to include another control information, in information signals, that are different from the above control information.

To illustrate, the mobile station 10 allowed to receive the location related information providing service stores first control information for validating the reception of the information signals, and the information signals sent from the base stations 21A to 21F include second control information for validating the reception of the information signals. The reception of the information signals are validated here only when the mobile station that stores the first control information receives the information signals including the second control information.

Further, while the mobile station 10 can receive all the location related information in the above-mentioned embodiment, it is not so limited but is possible to receive or not to receive only particular types of location related information; for example, only restaurants information.

To be concrete, the mobile station 10 stores third control information, control information indicating the types of receivable location related information. On the other hand, fourth control information, control information indicating types of location related information, are included in headers of packet signals sent from the base stations 21A to 21F. Then, the mobile station 10 can refer to the fourth control information included in the headers of the packet information signals that have been received from the base stations 21A to 21F, and abandon information signals other than the types of location related information designated by the third control information, which have been stored in the mobile station 10 itself after receiving the signals.

Furthermore, it is also possible for the mobile station 10 not to receive particular kinds of information, employing the similar method to the above. This method is beneficial in preventing minors from receiving location related information that are adult-rated.

### 3-1-2: Embodiment of Information Display in the Mobile Station 10

In the above-mentioned embodiment, the mobile station 10 is to show the received information on the liquid crystal display, but it is not limited to that mode of display. For example, it can be a voice presentation using the speaker of the mobile station 10 when showing the contents of the received information.

### 3-1-3: Embodiment of the Mobile Station 10

In the above-mentioned embodiment, the mobile station 10 such as a mobile phone is to be used, but it is not limited thereto. It also can be any mobile communication terminal such as a Personal Digital Assistants (PDA) without calling functions, if such terminal being equipped with a function for performing wireless communications between it and the base station 21 of the mobile communication network.

### 3-2: Embodiment of Base Stations 21A to 21F and Base Station Control Units 22A and 22B

### 3-2-1: Timing of the Information Transmission

In the above-mentioned embodiment the base station control units 22A and 22B are to transmit location related information at all times via the base stations 21A to 21F, but it is not necessarily in this way.

For example, the base station control units 22A and 22B can be equipped with a timer so as to transmit location related information via the base stations 21A to 21F at intervals according to the timer.

Also, when requested from a particular unit within the mobile communication network, for example, the gateway server 25, the base station control units 22A and 22B can transmit the location related information via base stations 21A to 21F in response to the request.

Also, when a request for information transmission is sent from a given unit outside the mobile communication network, for example, IP server 40A or 40B, to the gateway server 25, and a request for information transmission is subsequently made from the gateway server 25 to the base station control units 22A and 22B, it is possible to transmit location related information via base stations 21A to 21F in response to that request.

In another variation, the base station control units 22A and 22B can transmit location related information when requested from the mobile station 10.

For instance, a predetermined operation by the user causes the mobile station 10 to transmit the information request signals first. The information request signals include the above-mentioned control signals stored in the mobile station 10.

Subsequently, the request signals are received by one of the base stations 21A to 21F where the mobile station 10 is located. Supposing that the base station 21A receives the request signal, the base station 21A transmits the received request signals to the base station control unit 22A in this case.

The base station control unit 22A confirms that the received request signals include the above-mentioned control signals, reads out location related information from the memory 223, and transmits information signals via its subordinate base stations 21A to 21C.

The mobile station 10 located within the wireless cell zone of the base station 21A receives and interprets the information signals sent from the base station 21A, and displays the location related information.

### 3-2-2: Embodiment of the Device that Sends Information Signals

In the above-mentioned embodiment, signals indicating location related information are transmitted from the base stations 21A to 21F, but it is not limited thereto. The signals can be transmitted from a given device either by a wire or wirelessly connected to the mobile packet communication.

The given device, for instance, can be an information signal transmission device established exclusively for this information providing service.

### 3-3: Embodiment of Role Allocated to the Base Station Control Units 22A and 22B, and the Gateway Server 25

In the above-mentioned embodiment, the base station control unit 22AB, or 22, is equipped with the memory 223A, or 223B; location related information stored therein are transmitted via the base stations 21A to 21C, or 21D to 21F. However, it is not so limited but is sufficient to have storage means such as the memory 223A or 223B placed in a particular unit that can be communicated with the base station control unit 22A or 22B.

For example, the home memory 23 shown in Fig.1 can be equipped with the storage means; a switching center (not shown) of communication lines can be equipped with the storage means; or each of the base stations 21A to 21F can be equipped with the storage means.

Also, only the gateway server 25 may have storage means (the information storage 254, mentioned before), instead of the base stations control unit 22A or 22B having storage means such as the memory 223A or 223B. In this case, the gateway server 25 transmits an information transmission instruction with the said location related information to the base stations 21A to 21F corresponding to location related information stored by the storage means (the information storage 254), and the base stations 21A to 21F transmit the location related information in response to the received transmission instruction.

Thus, there is no need to establish a memory 223A or 223B for each of the base station control units 22A and 22B. Also, in updating information, the gateway server 25 only has to update location related information stored in itself.

### 3-4: Embodiment of Information Transmitted from the Base Stations 21A to 21F

### 3-4-1: An Originating Unit of Location Related Information

In the above-mentioned embodiment, location related information originates from the IP server 40A and 40B, and the location related information stored within the network are updated according to the update information from the IP server 40A and 40B, but it is not necessarily in this way.

For example, location related information can originate from a given server established in the mobile packet communication network by a common carrier, and the update information can be transmitted from this server to the base station control units 22A and 22B.

### 3-4-2:Types of Location Related Information

In the above-mentioned embodiment, location related information are mainly shop information such as restaurants, but it is not limited to such types of information.

For example, the information can be on time tables of train stations or bus stops of an area where the mobile station 10 is located, and also can be news or weather forecast of the area.

### 3-4-3: An Originating Unit and Embodiment of Menu Information

In the above-mentioned embodiment, menu information are information common to all the base station control units 22A and 22B, but it is not necessarily in this way. For example, the information can be common to a plurality of base station control units 22, or can be unique information for each base station control unit 22.

It is also possible for the mobile station 10 to store menu information in advance.

Furthermore, it is not necessary to have menu information. That is, the base station control units 22A and 22B can transmit only location related information at all times via base stations 21A to 21F, and the mobile station 10 can display the received location related information as they are.

### 3-5: Embodiment in Connection of IP Server 40

In the above-mentioned embodiment, the IP servers 40A and 40B are connected to the gateway server 25 via the Internet 30, but it is not limited to such a mode of connection.

For example, the IP servers 40A and 40B can be connected to the gateway server 25 via private lines, or can be placed inside the gateway server 25.

### 3-6: Description Language of Data

In the above-mentioned embodiment, data exchanged among the IP servers 40A and 40B, the gateway server 25, and the mobile station 10 are written in a form of HTML, but it is not limited thereto. It is possible to use other description languages such as Extensible Markup Language(XML).

## Claims

1. An information providing method for providing information to a mobile communication terminal (10) by transmitting information signals from base stations (21A - 21F) of a mobile communication network (20) serving a plurality of mobile communication terminals (10), comprising:
accumulating, at at least one of a base station control unit (22A, 22B) and a gateway server (25) within said mobile communication network (20), location-related information on a location covered by a base station (21A - 21F) obtained through the internet (30);
broadcasting said location related information as information signals from said base station (21A - 21F);
storing in a mobile communication terminal (10) first control information for validating reception of said information signals; and
adding second control information to said location-related information transmitted from said base station (21A - 21F) or from a wireless communication device, said second control information being used to validate reception of said information signals; and
wherein the reception of said information signals is validated only when said mobile communication terminal (10) that stores said first control information receives said information signals to which said second control information has been added.

2. An information providing method according to claim 1, wherein
the location-related information on a location is accumulated in a storage device;
and broadcasting is performed from a wireless communication device covering said location, said location-related information stored in said storage device as information signals; and the method further comprising the step:
receiving, at a mobile communication terminal (10) within said location, said location-related information broadcast from said wireless communication device.

3. An information providing method according to claim 1 or 2,
wherein said location-related information is transmitted at all times.

4. An information providing method according to claim 1 or 2,
wherein said location-related information is transmitted at intervals.

5. An information providing method according to claim 1 or 2,
wherein said information signal is received by the particular mobile communication terminal (10).

6. An information providing method according to claim 1 or 2,
wherein said location-related information relating to a location is accumulated in a server device (25) connected to said mobile communication network (20), and said information signals of said location-related information are transmitted from said base station (21A - 21F) or from said wireless communication device in response to a transmission request from said server device (25).

7. An information providing method according to claim 1 or 2, further comprising:
storing in the mobile communication terminal (10) control information for validating a request for said location-related information;
transmitting, from said mobile communication terminal (10) to said mobile communication network (20), a request signal requesting said location-related information along with said control information; and
transmitting, in a case of receiving said request signal to which said control information has been added, said location related information as information signals from said base station (21A - 21F) or from said wireless communication device.

8. An information providing method according to claim 1 or 2,
wherein said mobile communication terminal (10) is a mobile phone used for conducting wireless communication.

9. A mobile communication network serving a plurality of mobile communication terminals (10) and providing information to mobile communication terminals (10) by transmitting information signals from base stations (21A - 21F), comprising:
means for accumulating location-related information;
at least one memory (223A - 223B, 254) comprised in at least one of a base station control unit (22A, 22B) and a gateway server (25) for storing location-related information on a location covered by a base station (21A - 21F) obtained through the internet (30); and
information signal transmission means for broadcasting said location-related information as information signals from said base station (21A - 21F),
wherein first control information for validating reception of said information signals is stored in a mobile communication terminal (10);
wherein second control information is added to said location-related information transmitted from said base station (21A - 21F) or from a wireless communication device, said second control information being used to validate reception of said information signals; and
wherein the reception of said information signals is validated only when said mobile communication terminal (10) that stores said first control information receives said information signals to which said second control information has been added.

10. A mobile communication network according to claim 9,
wherein said information signal transmission means is arranged to transmit said location-related information after adding second control information for validating reception of information signals of said location-related information, whereby reception of the information signals is validated only when said mobile communication terminal (10) storing said first control information receives information signals to which said second control information has been added.

11. A mobile communication network according to claim 9 or 10,
wherein third control information is stored in a mobile communication terminal (10), said third control information designating a type of location-related information that can be received by said mobile communication terminal (10); and
wherein said information signal transmission means is arranged to transmit said location-related information after adding fourth control information for identifying a type of said location-related information, whereby reception of said information signals is validated on the basis of said third control information and said fourth control information.

12. A mobile communication network according to claim 9,
further comprising information update means for updating contents of said location-related information stored in said memory (223A - 223B).

13. A mobile communication network according to claim 9,
wherein said mobile communication terminal (10) is a mobile phone used for conducting wireless communication.

14. A mobile communication terminal served by a mobile communication network (20) and arranged for conducting wireless communication with base stations (21A - 21F) of said mobile communication network (20), comprising:
a memory for storing third control information designating a type of location-related information on a location covered by a base station (21A - 21F), said location-related information being transmitted from said base station (21A - 21F);
information signal receiving means arranged for receiving information signals to which fourth control information for identifying a type of said location-related information that has been added; and
information signal validating means arranged for validating reception of said information signals on the basis of said stored third information and said received fourth information, and
wherein the mobile communication terminal is adapted to abandon information signals other than the type of location related information designated in the third control information.

15. A mobile communication terminal according to claim 14,
wherein said mobile communication terminal (10) is a mobile phone used for conducting wireless communication.

16. An information management system for managing information to be transmitted from a wireless communication device to a mobile communication terminal (10) within a location covered by said wireless communication device, comprising:
means for accumulating location-related information;
at least one memory (223A - 223B, 254) comprised in at least one of a base station control unit (22A, 22B) and a gateway server (25) arranged for accumulating location-related information on a location covered by a base station (21A - 21F) obtained through the internet (30); and
means for transmitting, to a wireless communication device covering said location, said accumulated location-related information, said location-related information being broadcast as information signals from said wireless communication device.
wherein first control information for validating reception of said information signals is stored in a mobile communication terminal (10);
wherein second control information is added to said location-related information transmitted from said base station (21A - 21F) or from a wireless communication device, said second control information being used to validate reception of said information signals; and
wherein the reception of said information signals is validated only when said mobile communication terminal (10) that stores said first control information receives said information signals to which said second control information has been added.

17. The information management system according to claim 16, wherein
said means for accumulating location-related information is connected through the internet (30) to the mobile communication network (20); and
said information management system further comprising:
means for transmitting said accumulated location-related information to said mobile communication network (20) having broadcasting means for broadcasting from said base station (21A - 21F) location-related information on a location covered by said base station (21A - 21F) as information signals, and
wherein said transmission means is adapted, in a case that said accumulated location-related information is updated, to transmit to said mobile communication network (20) as update information a difference between said transmitted location-related information and said updated location-related information.

## Patentansprüche

1. Informationsbereitstellendes Verfahren zum Bereitstellen von Information an ein Mobilkommunikationsendgerät (10) durch Übertragen von Informationssignalen aus Basisstationen (21A - 21F) eines Mobilkommunikationsnetzwerks (20), das eine Mehrzahl von Mobilkommunikationsendgeräten (10) bedient, umfassend:
Akkumulieren, an einer Basisstationssteuerungseinheit (22A, 22B) und/oder einem Gatewayserver (25) innerhalb des Mobilkommunikationsnetzwerks (20), von ortsbezogener Information über einen von der Basisstation (21A - 21F) abgedeckten Ort, erhalten über das Internet (30);
Rundsenden der ortsbezogenen Information als Informationssignale aus der Basisstation (21A - 21F);
Speichern, in einem Mobilendgerät (10), von erster Steuerinformation zum Validieren des Empfangs der Informationssignale; und
Addieren zweiter Steuerinformation zur aus der Basisstation (21A - 21F) oder aus einer Funkkommunikationsvorrichtung übertragenen ortsbezogenen Information, wobei die zweite Steuerinformation verwendet wird, um den Empfang der Informationssignale zu validieren; und
wobei der Empfang der Informationssignale nur validiert wird, wenn das Mobilkommunikationsendgerät (10), das die erste Steuerinformation speichert, die Informationssignale empfängt, zu denen die zweite Steuerinformation hinzugefügt worden ist.

2. Informationsbereitstellendes Verfahren gemäß Anspruch 1, wobei
die ortsbezogene Information über einen Ort in einer Speichervorrichtung akkumuliert wird;
und das Rundsenden aus einer den Ort abdeckenden Funkkommunikationsvorrichtung durchgeführt wird, wobei die ortsbezogene Information in der Speichervorrichtung als Informationssignale gespeichert wird und das Verfahren weiter den Schritt umfasst:
Empfangen, an einem Mobilkommunikationsendgerät (10) innerhalb des Ortes, der aus der Funkkommunikationsvorrichtung ausgestrahlten ortsbezogenen Information.

3. Informationsbereitstellendes Verfahren gemäß Anspruch 1 oder 2,
wobei die ortsbezogene Information zu allen Zeiten übertragen wird.

4. Informationsbereitstellendes Verfahren gemäß Anspruch 1 oder 2,
wobei die ortsbezogene Information in Intervallen übertragen wird.

5. Informationsbereitstellendes Verfahren gemäß Anspruch 1 oder 2, wobei das Informationssignal durch das bestimmte Mobilkommunikationsendgerät (10) empfangen wird.

6. Informationsbereitstellendes Verfahren gemäß Anspruch 1 oder 2,
wobei die sich auf einen Ort beziehende ortsbezogene Information in einer Servervorrichtung (25) akkumuliert wird, die mit dem Mobilkommunikationsnetzwerk (20) verbunden ist, und die Informationssignale der ortsbezogenen Information aus der Basisstation (21A - 21F) oder aus der Funkkommunikationsvorrichtung in Reaktion auf eine Übertragungsanforderung aus der Servervorrichtung (25) übertragen werden.

7. Informationsbereitstellendes Verfahren gemäß Anspruch 1 oder 2, weiter umfassend:
Speichern, im Mobilkommunikationsendgerät (10), von Steuerinformation zum Validieren einer Anfrage nach der ortsbezogenen Information;
Übertragen, aus dem Mobilkommunikationsendgerät (10), eines Anforderungssignals, welches die ortsbezogene Information zusammen mit der Steuerinformation anfordert, an das Mobilkommunikationsnetzwerk (20); und
Übertragen, in einem Fall des Empfangens des Anforderungssignals, zu dem die Steuerinformation hinzugefügt worden ist, der ortsbezogenen Information als Informationssignale aus der Basisstation (21A - 21F), oder aus der Funkkommunikationsvorrichtung.

8. Informationsbereitstellendes Verfahren gemäß Anspruch 1 oder 2,
wobei das Mobilkommunikationsendgerät (10) ein Mobiltelefon ist, das zum Ausführen von Funkkommunikation verwendet wird.

9. Mobilkommunikationsnetzwerk, das eine Mehrzahl von Mobilkommunikationsendgeräten (10) bedient und Information an Mobilkommunikationsendgeräte (10) durch Übertragen von Informationssignalen aus Basisstationen (21A - 21F) bereitstellt, umfassend:
Mittel zum Akkumulieren von ortsbezogener Information; zumindest einen Speicher (223A - 223B, 254), der in einer Basisstationssteuereinheit (22A, 22B) und/oder einem Gatewayserver (25) beinhaltet ist, zum Speichern von ortsbezogener Information über einen Ort, der von einer Basisstation (21A - 21F) abgedeckt wird, erhalten über das Internet (30); und
Informationssignalübertragungsmittel zum Rundsenden der ortsbezogenen Information als Informationssignale aus der Basisstation (21A - 21F),
wobei erste Steuerinformation zum Validieren des Empfangs der Informationssignale in einem Mobilkommunikationsendgerät (10) gespeichert wird;
wobei zweite Steuerinformation zu der aus der Basisstation (21A - 21F) oder aus einer Funkkommunikationsvorrichtung übertragenen ortsbezogenen Information hinzugefügt wird, wobei die zweiten Steuerinformation verwendet wird, um den Empfang der Informationssignale zu validieren; und
wobei der Empfang der Informationssignale nur validiert wird, wenn das Mobilkommunikationsendgerät (10), das die erste Steuerinformation speichert, die Informationssignale, zu denen die zweite Steuerinformation hinzugefügt worden ist, empfängt.

10. Mobilkommunikationsnetzwerk gemäß Anspruch 9,
wobei das Informationssignalübertragungsmittel die ortsbezogene Information überträgt, nachdem zweite Steuerinformation zum Validieren des Empfangs von Informationssignalen der ortsbezogenen Information hinzugefügt worden ist, wodurch der Empfang der Informationssignale nur validiert wird, wenn das die erste Steuerinformation speichernde Mobilkommunikationsendgerät (10) Informationssignale empfängt, zu denen die zweite Steuerinformation hinzugefügt worden ist.

11. Mobilkommunikationsnetzwerk gemäß Anspruch 9 oder 10,
wobei dritte Steuerinformation in einem Mobilkommunikationsendgerät (10) gespeichert wird und die dritte Steuerinformation eine Art von ortsbezogener Information bezeichnet, die von dem Mobilkommunikationsendgerät (10) empfangen werden kann; und
wobei das Informationssignalübertragungsmittel dafür ausgelegt ist, die ortsbezogene Information zu übertragen, nachdem vierte Steuerinformation zum Identifizieren einer Art von ortsbezogener Information hinzugefügt worden ist, wodurch der Empfang der Informationssignale auf Basis der dritten Steuerinformation und der vierten Steuerinformation validiert wird.

12. Mobilkommunikationsnetzwerk gemäß Anspruch 9,
weiter umfassend Informationsaktualisierungsmittel zum Aktualisieren von Inhalten der in dem Speicher (223A - 223B) gespeicherten ortsbezogenen Information.

13. Mobilkommunikationsnetzwerk gemäß Anspruch 9,
wobei das Mobilkommunikationsendgerät (10) ein Mobiltelefon ist, das zum Führen drahtloser Kommunikation verwendet wird.

14. Mobilkommunikationsendgerät, das von einem Mobilkommunikationsnetzwerk (20) bedient wird und dafür ausgelegt ist, Funkkommunikation mit Basisstationen (21A - 21F) des Mobilkommunikationsnetzwerks (20) zu führen, umfassend:
einen Speicher zum Speichern dritter Steuerinformation, die eine Art von ortsbezogener Information über einen durch eine Basisstation (21A - 21F) abgedeckten Ort bezeichnet, wobei die ortsbezogene Information aus der Basisstation (21A - 21F) übertragen wird;
Informationssignalempfangsmittel, die zum Empfangen von Informationssignalen ausgelegt sind, zu denen vierte Steuerinformation zum Identifizieren einer Art von ortsbezogener Information hinzugefügt worden ist; und
Informationssignalvalidierungsmittel, die zum Validieren des Empfangs der Informationssignale auf Basis der gespeicherten dritten Information und der empfangenen vierten Information ausgelegt ist, und
wobei das Mobilkommunikationsendgerät dafür ausgelegt ist, andere Informationssignale als die Art von ortsbezogener Information, die durch die dritte Steuerinformation bezeichnet ist, zu verwerfen.

15. Mobilkommunikationsendgerät gemäß Anspruch 14,
wobei das Mobilkommunikationsendgerät (10) ein Mobiltelefon ist, das zum Führen von Funkkommunikation verwendet wird.

16. Informationsverwaltungssystem zum Verwalten von aus einer Funkkommunikationsvorrichtung an ein Mobilkommunikationsendgerät (10) innerhalb eines von der Funkkommunikationsvorrichtung abgedeckten Ortes zu übertragender Information, umfassend:
Mittel zum Akkumulieren von ortsbezogener Information;
zumindest einen Speicher (223A - 223B, 254), der in einer Basisstationssteuereinheit (22A, 22B) und/oder einem Gatewayserver (25) beinhaltet ist, ausgelegt zum Akkumulieren ortsbezogener Information über einen durch eine Basisstation (21A - 21F) abgedeckten Ort, erhalten über das Internet (30); und
Mittel zum Übertragen, an eine den Ort abdeckende Funkkommunikationsvorrichtung, der akkumulierten ortsbezogenen Information, wobei die ortsbezogene Information als Informationssignale aus der Funkkommunikationsvorrichtung ausgesendet wird,
wobei erste Steuerinformation zum Validieren des Empfangs der Informationssignale in einem Mobilkommunikationsendgerät (10) gespeichert wird;
wobei zweite Steuerinformation zu der aus der Basisstation (21A - 21F) oder aus einer Funkkommunikationsvorrichtung übertragenen ortsbezogenen Information hinzugefügt wird, wobei die zweite Steuerinformation verwendet wird, um einen Empfang der Informationssignale zu validieren; und
wobei der Empfang der Informationssignale nur validiert wird, wenn das Mobilkommunikationsendgerät (10), das die erste Steuerinformation speichert, die Informationssignale empfängt, zu denen die zweite Steuerinformation hinzugefügt worden ist.

17. Informationsverwaltungssystem gemäß Anspruch 16, wobei
das Mittel zum Akkumulieren von ortsbezogener Information über das Internet (30) mit dem Mobilkommunikationsnetzwerk (20) verbunden ist; und
das Informationsverwaltungssystem weiter umfasst:
Mittel zu Übertragen der akkumulierten ortsbezogenen Information an das Mobilkommunikationsnetzwerk (20), das Rundsende-Mittel zum Rundsenden aus der Basisstation (21A - 21F) von ortsbezogener Information über einen von der Basisstation (21A - 21F) abgedeckten Ort als Informationssignale aufweist, und
wobei das Übertragungsmittel dafür ausgelegt ist, in einem Fall, bei dem akkumulierte ortsbezogene Information aktualisiert wird, an das Mobilkommunikationsnetzwerk (20) als Aktualisierungsinformation einen Unterschied zwischen der übertragenen ortsbezogenen Information und der aktualisierten ortsbezogenen Information zu übertragen.

## Revendications

1. Procédé permettant de fournir des informations pour fournir des informations à un terminal de communication mobile (10) en transmettant des signaux d'informations depuis des stations de base (21A-21F) d'un réseau de communication mobile (20) desservant une pluralité de terminaux de communication mobile (10), comprenant le fait:
d'accumuler, à au moins l'un parmi une unité (22A, 22B) de commande de station de base et un serveur passerelle (25) dans ledit réseau de communication mobile (20), des informations relatives à l'emplacement se rapportant à un emplacement couvert par une station de base (21A-21F) obtenues par le biais d'Internet (30);
de diffuser lesdites informations relatives à l'emplacement en tant que signaux d'informations depuis ladite station de base (21A-21F);
de stocker dans un terminal de communication mobile (10), une première information de commande pour valider la réception desdits signaux d'informations; et
d'ajouter une deuxième information de commande auxdites informations relatives à l'emplacement transmises depuis ladite station de base (21A-21F) ou depuis un dispositif de communication sans-fil, ladite deuxième information de commande étant utilisée pour valider la réception desdits signaux d'informations; et
où la réception desdits signaux d'informations n'est validée que lorsque ledit terminal de communication mobile (10) qui stocke ladite première information de commande reçoit lesdits signaux d'informations auxquels ladite deuxième information de commande a été ajoutée.

2. Procédé permettant de fournir des informations selon la revendication 1, dans lequel
les informations relatives à l'emplacement se rapportant à un emplacement sont accumulées dans un dispositif de stockage;
et la diffusion est exécutée depuis un dispositif de communication sans-fil couvrant ledit emplacement, lesdites informations relatives à l'emplacement stockées dans ledit dispositif de stockage en tant que signaux d'informations; et le procédé comprenant en plus l'étape qui consiste à :
recevoir, au terminal de communication mobile (10) dans ledit emplacement, lesdites informations relatives à l'emplacement diffusées depuis ledit dispositif de communication sans-fil.

3. Procédé permettant de fournir des informations selon la revendication 1 ou 2,
où lesdites informations relatives à l'emplacement sont transmises en tout temps.

4. Procédé permettant de fournir des informations selon la revendication 1 ou 2,
où lesdites informations relatives à l'emplacement sont transmises par intervalles.

5. Procédé permettant de fournir des informations selon la revendication 1 ou 2,
où ledit signal d'information est reçu par le terminal de communication mobile (10) particulier.

6. Procédé permettant de fournir des informations selon la revendication 1 ou 2,
où lesdites informations relatives à l'emplacement se rapportant à un emplacement sont accumulées dans un dispositif serveur (25) connecté audit réseau de communication mobile (20), et lesdits signaux d'informations desdites informations relatives à l'emplacement sont transmis depuis ladite station de base (21A-21F) ou depuis ledit dispositif de communication sans-fil en réponse à une demande de transmission provenant dudit dispositif serveur (25).

7. Procédé permettant de fournir des informations selon la revendication 1 ou 2, comprenant en plus le fait :
de stocker dans le terminal de communication mobile (10), une information de commande pour valider une demande desdites informations relatives à l'emplacement;
de transmettre, depuis ledit terminal de communication mobile (10) audit réseau de communication mobile (20), un signal de requête demandant lesdites informations relatives à l'emplacement en même temps que ladite information de commande; et
de transmettre, dans le cas de la réception dudit signal de requête auquel ladite information de commande a été ajoutée, lesdites informations relatives à l'emplacement en tant que signaux d'informations depuis ladite station de base (21A-21F) ou depuis ledit dispositif de communication sans-fil.

8. Procédé permettant de fournir des informations selon la revendication 1 ou 2,
où ledit terminal de communication mobile (10) est un téléphone mobile utilisé pour effectuer une communication sans-fil.

9. Réseau de communication mobile desservant une pluralité de terminaux de communication mobile (10) et fournissant des informations à des terminaux de communication mobile (10) en transmettant des signaux d'informations depuis les stations de base (21A-21F), comprenant :
un moyen pour accumuler des informations relatives à l'emplacement;
au moins une mémoire (223A - 223B, 254) comprise dans au moins l'un parmi une unité (22A, 22B) de commande de station de base et un serveur passerelle (25) pour stocker des informations relatives à l'emplacement se rapportant à un emplacement couvert par une station de base (21A-21F) obtenues par le biais d'Internet (30); et
un moyen de transmission de signaux d'informations pour diffuser lesdites informations relatives à l'emplacement en tant que signaux d'informations depuis ladite station de base (21A-21F);
où la première information de commande pour valider la réception desdits signaux d'informations est stockée dans un terminal de communication mobile (10);
où la deuxième information de commande est ajoutée auxdites informations relatives à l'emplacement transmises depuis ladite station de base (21A-21F) ou depuis un dispositif de communication sans-fil, ladite deuxième information de commande étant utilisée pour valider la réception desdits signaux d'informations; et
où la réception desdits signaux d'informations n'est validée que lorsque ledit terminal de communication mobile (10) qui stocke ladite première information de commande reçoit lesdits signaux d'informations auxquels ladite deuxième information de commande a été ajoutée.

10. Réseau de communication mobile selon la revendication 9,
où ledit moyen de transmission de signaux d'informations est agencé pour transmettre lesdites informations relatives à l'emplacement après l'ajout de la deuxième information de commande pour valider la réception des signaux d'informations desdites informations relatives à l'emplacement, de sorte que la réception des signaux d'informations n'est validée que lorsque ledit terminal de communication mobile (10) stockant ladite première information de commande reçoit les signaux d'informations auxquels ladite deuxième information de commande a été ajoutée.

11. Réseau de communication mobile selon la revendication 9 ou 10,
dans lequel une troisième information de commande est stockée dans un terminal de communication mobile (10), ladite troisième information de commande désignant un type d'informations relatives à l'emplacement qui peuvent être reçues par ledit terminal de communication mobile (10); et
où ledit moyen de transmission de signaux d'informations est agencé pour transmettre lesdites informations relatives à l'emplacement après l'ajout d'une quatrième information de commande pour identifier un type desdites informations relatives à l'emplacement, de sorte que la réception desdits signaux d'informations est validée sur la base de ladite troisième information de commande et de ladite quatrième information de commande.

12. Réseau de communication mobile selon la revendication 9,
comprenant en plus un moyen de mise à jour d'informations destiné à mettre à jour des contenus desdites informations relatives à l'emplacement stockées dans ladite mémoire (223A-223B).

13. Réseau de communication mobile selon la revendication 9,
dans lequel ledit terminal de communication mobile (10) est un téléphone mobile utilisé pour effectuer une communication sans-fil.

14. Terminal de communication mobile desservi par un réseau de communication mobile (20) et agencé pour effectuer une communication sans-fil avec des stations de base (21A-21F) dudit réseau de communication mobile (20), comprenant :
une mémoire pour stocker une troisième information de commande désignant un type d'informations relatives à l'emplacement se rapportant à un emplacement couvert par une station de base (21A-21F), lesdites informations relatives à l'emplacement étant transmises depuis ladite station de base (21A-21F);
un moyen de réception de signaux d'informations agencé pour recevoir des signaux d'informations auxquels une quatrième information de commande pour identifier un type desdites informations relatives à l'emplacement qui ont été ajoutées; et
un moyen de validation de signaux d'informations agencé pour valider la réception desdits signaux d'informations sur la base de ladite troisième information stockée et de ladite quatrième information reçue; et
où le terminal de communication mobile est adapté pour abandonner des signaux d'informations autres que le type d'informations relatives à l'emplacement désigné dans la troisième information de commande.

15. Terminal de communication mobile selon la revendication 14,
où ledit terminal de communication mobile (10) est un téléphone mobile utilisé pour effectuer une communication sans-fil.

16. Système de gestion d'informations pour gérer des informations à transmettre depuis un dispositif de communication sans-fil à un terminal de communication mobile (10) dans un emplacement couvert par ledit dispositif de communication sans-fil, comprenant :
un moyen pour accumuler des informations relatives à l'emplacement;
au moins une mémoire (223A-223B, 254) comprise dans au moins l'un parmi une unité (22A-22B) de commande de station de base et un serveur passerelle (25) agencée pour accumuler des informations relatives à l'emplacement se rapportant à un emplacement couvert par une station de base (21A-21F) obtenues par Internet (30); et
un moyen pour transmettre, à un dispositif de communication sans-fil couvrant ledit emplacement, lesdites informations relatives à l'emplacement accumulées, lesdites informations relatives à l'emplacement étant diffusées en tant que signaux d'informations depuis ledit dispositif de communication sans-fil,
où la première information de commande pour valider la réception desdits signaux d'informations est stockée dans un terminal de communication mobile (10);
où la deuxième information de commande est ajoutée auxdites informations relatives à l'emplacement transmises depuis ladite station de base (21A-21F) ou depuis un dispositif de communication sans-fil, ladite deuxième information de commande étant utilisée pour valider la réception desdits signaux d'informations; et
où la réception desdits signaux d'informations n'est validée que lorsque ledit terminal de communication mobile (10) qui stocke ladite première information de commande reçoit lesdits signaux d'informations auxquels ladite deuxième information de commande a été ajoutée.

17. Système de gestion d'informations selon la revendication 16, dans lequel
ledit moyen pour accumuler les informations relatives à l'emplacement est connecté par Internet (30) au réseau de communication mobile (20); et
ledit système de gestion d'informations comprenant en plus :
un moyen pour transmettre lesdites informations relatives à l'emplacement accumulées audit réseau de communication mobile (20) ayant un moyen de diffusion pour diffusion depuis ladite station de base (21A-21F) des informations relatives à l'emplacement se rapportant à un emplacement couvert par ladite station de base (21A-21F) en tant que signaux d'informations, et
où ledit moyen de transmission est adapté, dans un cas où lesdites informations relatives à l'emplacement accumulées sont mises à jour, pour transmettre audit réseau de communication mobile (20) en tant qu'information mise à jour, une différence entre lesdites informations relatives à l'emplacement transmises et lesdites informations relatives à l'emplacement mises à jour.
